# EUROPÄISCHE PATENTSCHRIFT

(11) **EP 0 603 217 B1**
(45) Veröffentlichungstag und Bekanntmachung des Hinweises auf die Patenterteilung: **27.03.1996**
(21) Anmeldenummer: 92918226.9
(22) Anmeldetag: 29.08.1992
(51) Int. Cl.: B67D 5/02, B67D 5/365, B67D 5/60, F16N 31/00

(54) **EINRICHTUNG ZUM SAMMELN DER FLÜSSIGKEIT MEHRERER QUELLEN IN EINEM SAMMELBEHÄLTER**
ARRANGEMENT FOR COLLECTING LIQUID FROM SEVERAL SOURCES IN A COLLECTING RECIPIENT
DISPOSITIF POUR RECUEILLIR DANS UN RECIPIENT COLLECTEUR LE LIQUIDE PROVENANT DE DIFFERENTES SOURCES

(30) Priorität: 11.09.1991 DE 4130235
(43) Veröffentlichungstag der Anmeldung: 29.06.1994
(73) Patentinhaber: ITT Automotive Europe GmbH, D-60488 Frankfurt (DE)
(72) Erfinder: CURATI, Roberto, D-6070 Langen (DE)
(86) Internationale Anmeldenummer: EP9201996
(87) Internationale Veröffentlichungsnummer: WO9304976

(56) Entgegenhaltungen:
- DE-U- 9 102 774
- US-A- 1 662 617
- US-A- 1 886 098
- US-A- 2 204 677
- US-A- 2 513 627
- US-A- 3 674 179
- US-A- 4 948 014
- US-A- 4 993 573

## Beschreibung

Die Erfindung betrifft eine Einrichtung zum Sammeln einer Flüssigkeit in einem zentralen Sammelbehälter. Durch die wachsende Bedeutung des Umweltschutzes ist es nicht nur immer wichtiger geworden, industriell benutzte Flüssigkeiten zu sammeln und zentral zu erfassen. Eine derartige Erfassung kann sehr erleichtert oder auch vielfach erst dann nur ermöglicht werden, wenn die Stoffe sortenrein gesammelt werden, da andernfalls die Verunreinigungen zu unüberwindbaren Problemen bei der Verarbeitung bzw. Rückgewinnung von Rohstoffen führen. Man ist daher bemüht, den Kreislauf der einzelnen Stoffe von dem anderer Stoffe möglichst getrennt zu halten und Verunreinigung über das Maß des betriebsbedingten Gebrauchs der Bremsflüssigkeit auszuschließen.

Zur Unterstützung eines derartigen geschlossenen Systems ist es aus der EP-OS 294 719 bekannt geworden, Auffangbehälter und Sammelbehälter mit aneinander angepaßten Anschlüssen zu versehen, wodurch ein Vermischen mit anderen Flüssigkeiten erschwert wird.

Zur Erleichterung und Beschleunigung des Sammelns der Flüssigkeiten ist aus dem deutschen Gebrauchsmuster G 9102774.8 weiterhin bekannt geworden, den Sammelbehälter mit einem Leitungssystem zu versehen, durch welches gleichzeitig mehrere Auffangbehälter mit dem Sammelbehälter verbunden werden können. Dabei ist das Leitungssystem über einen Schnellanschluß mit dem Sammelbehälter verbindbar, so daß sich einerseits das Leitungssystem schnell von dem Sammelbehälter lösen läßt, andererseits aber bei gleichen Schnellanschlüssen sowohl für den Anschluß des Leitungssystems als auch für die Auffangbehälter der Sammelbehälter sich nachträglich mit dem Leitungssystem ergänzen läßt.

Aus der US-A-2,513,627 ist ein Durchflußindikator einer Melkmaschine bekannt geworden, an den mehrere Milchleitungen angeschlossen sind. Der Durchflußindikator ist fest mit dem Deckel eines Milcheimers verbunden und erlaubt mittels eines transparenten Deckels die optische Kontrolle des Milchflusses. Zum Reinigen der Melkmaschine kann der Durchflußindikator durch Abschrauben eines den transparenten Deckel haltenden Sicherungsrings entfernt werden.

Die Erfindung geht aus von einer Einrichtung der sich aus dem Oberbegriff des Hauptanspruchs ergebenen Gattung und hat sich zur Aufgabe gestellt, bei einer derartigen Einrichtung den einfachen Anschluß einer Vielzahl ggf. weiter von dem Sammelbehälter entfernt befindlicher Druckmittelquellen zu ermöglichen, wobei es sich um ein geschlossenes, eine schnelle Entleerung der Quellen ermöglichendes System handeln soll.

Die Erfindung schlägt hierfür zwei grundlegende Lösungen vor. Zum einen ist das Leitungssystem aus sternförmig mit dem Behälter verbundenen Quellen gebildet, die über einen gemeinsamen Verteilerkopf Zugriff zu dem Sammelbehälter haben. Unter sternförmig ist dabei zu verstehen, daß das Leitungssystem aus Leitungen besteht, die in einem gemeinsamen Zentrum enden. Dabei können die Leitungen z.B. strahlenförmig verlaufen aber auch räumlich teilweise parallel verlaufen. Hierdurch können in besonders einfacher Weise mehrere an die Schläuche angeschlossene Quellen gleichzeitig über eigene Zuleitungen mit dem Sammelbehälter verbunden werden. Dabei wird ein vergleichsweise großer Strömungsquerschnitt für die Summe aller Quellen erreicht. Der Verteilerkopf ist, einschließlich des Schnellanschlusses, vorzugsweise aus dem Sammelbehälter heraus lösbar, wobei die nach dem Herausschrauben so gebildete Öffnung zum Entleeren des Sammelbehälters durch die zuständige Entsorgungsfirma benutzt werden kann (s. DE-GM G9102774.8). Durch entsprechende Versiegelung, Schlüsselcodierungen und andere Maßnahmen kann sichergestellt werden, daß nur das vorgesehene Leitungssystem über den Schnellanschluß mit dem zugeordneten Sammelbehälter verbunden werden kann (s. Anspruch 2).

Nach Anspruch 3 ist vorgesehen, den Verteilerkopf an einen Auffangbehälter anzubringen, welcher wiederum mit dem Sammelbehälter verbindbar ist.

Für den Verteilerkopf ergibt sich eine besonders einfache Ausgestaltung in Anwendung der Merkmalskombination nach Anspruch 4. Dabei können die Zuleitungskanäle in einem 90° überschreitenden Winkel auf den Zentralkanal zulaufen. Damit wird ausgeschlossen, daß zwei senkrecht zum Zentralkanal verlaufende Zuleitungskanäle miteinander fluchten können und insbesondere für den Fall, daß einer der beiden Zuleitungskanäle gerade nicht benutzt wird, über diesen ein Teil der Flüssigkeit den Verteilerkopf verläßt, die von dem anderen Zuleitungskanal stammt.

Ein sehr einfaches System zum Anschließen der Quellen ergibt sich dadurch, daß die dem Verteilerkopf abgewandten Enden der Schläuche einfach auf Anschlußstifte der Flüssigkeitsquellen aufgesteckt werden. Hierzu empfehlen sich die aus Anspruch 5 ergebenden Maßnahmen. Hierdurch lassen sich die Durchmesser der Verbindungsschläuche in optimaler Weise an die miteinander zu verbindenden Elemente (Anschlußstifte, Anschlußstutzen) anpassen.

Um das Gewicht des Verteilerkopfes zu vermindern und diesen weitgehend vor Korrosion zu schützen, empfiehlt sich die Verwendung der Merkmale in Anspruch 6. Der Verteilerkopf kann dabei insbesondere die Form eines flachen Kreiszylinders haben, den die Zuleitungskanäle strahlenförmig von der Mantelfläche her durchdringen und so in den axial verlaufenden Zentralkanal münden.

Um zu erreichen, daß die Enden der gerade nicht benutzten Schläuche abgedichtet sind und an definierter Stelle dem Bedienungspersonal zum Anschluß weitere Quellen zur Verfügung stehen, empfiehlt sich die in Anspruch 7 angegebene Maßnahme. Hierdurch wird verhindert, daß die Enden der Schläuche lose vom Verteilerkopf herunterhängen, sich untereinander verwirren und daß die zu sammelnde Flüssigkeit zum Teil aus den Enden austreten kann.

Eine zur Anordnung der Aufnahmenippel geeignete Fläche ist in Anspruch 8 angegeben.

Eine weitere Lösung für die erfindungsgemäße Aufgabenstellung ergibt sich aus der Merkmalskombination nach Anspruch 9. Diese Lösung besteht im Prinzip darin, die einzelnen mit den zu entleerenden Quellen zu verbindenden Leitungen hintereinander in Reihe zu schalten, wobei die Anschlußstellen der Leitungen jeweils mit lösbaren Schnellverbindern versehen sind. Dabei können generell die Leitungen als flexible Schläuche oder als stabile Rohre ausgebildet sein, so daß unter den hier beschriebenen "Schläuchen" auch Rohre zu verstehen sind. Durch die sich summierenden Strecken der einzelnen Schläuche lassen sich auch weiter entfernt liegende Quellen in einfacher Weise mit dem Sammelbehälter verbinden, indem die Quelle an das ihr nächstliegende Schlauchende angeschlossen wird. Derartige miteinander verbundene Schläuche können sich also durch größere Werkstatthallen ziehen und ermöglichen so an mehreren Stellen die Verbindung der einzelnen Quellen mit einem zentralen Sammelbehälter.

In vorteilhafter Weiterbildung der Erfindung läßt sich ein derartiges Schlauchsystem an der Wand montieren indem insbesondere für eine stabile Halterung der Verbindungsstellen und damit der Schnellanbinder gesorgt wird. Die Verbindungsschläuche selber können mittels geeigneter Schellen dann an der Wand gehalten werden. Die Lösung mit den in Reihe geschalteten Schläuchen für große Werkstatthallen eignet sich insbesondere zur Verwendung besonders großer Sammelbehälter wie sie heute zum Teil schon in genormter Form in Gebrauch sind. Das gilt beispielsweise für die 1000-Liter-ASF- und KTC-Chemikalienbehälter. Bei den Rohren/Schläuchen können auch genormte Längen verwandt werden wie beispielsweise 3 m Stücke und 10 m Stücke.

Die erfindungsgemäßen Lösungen eignen sich insbesondere zur Verwendung bei Bremsflüssigkeit. Dabei können zum einen, insbesondere hinsichtlich der Lösung nach Anspruch 9 Auffangbehälter, wie sie in dem o. g. Gebrauchsmuster beschrieben sind, in einen weit entfernt stehenden Sammelbehälter entleert werden. Die Erfindung ist aber auch geeignet, insbesondere mit der sich aus den Ansprüchen 1 bis 8 ergebenden Lösung, die Bremsen von Kraftfahrzeugen trockenzulegen, die beispielsweise für die Wiederverwertung ihrer Ausgangsmaterialien zerlegt (Schredderanlage) werden sollen. Für eine derartige Naßentsorgung ist insbesondere ein sich aus Anspruch 13 ergebendes Verfahren geeignet, bei dem die Schlauchenden mit den Entlüftungsventilen der Bremsen und/oder Kupplung und Lenkung des jeweiligen Fahrzeugs verbunden werden, so daß, selbst wenn die einzelnen Aggregate (Bremsen) mehr als ein Entlüftungsventil besitzen, gleichzeitig alle Aggregate (Bremsen) eines Fahrzeugs trockengelegt werden können. Hierdurch ergibt sich eine große Zeitersparnis und Arbeitsersparnis, da für das Trockenlegen sämtlicher Bremsen nur ein einziges Mal so lange Luftdruck auf den Ausgleichsbehälter gegeben werden muß bis die Bremsflüssigkeit aus den geöffneten Entlüftungsventilen ausgetreten ist und die Bremsen trockengelegt sind.

Ausführungsbeispiele der Erfindung werden nachfolgend anhand der Zeichnung erläutert. Darin zeigt:
- Fig. 1: einen Auffangbehälter, der über einen Schnellanschluß gemäß dem deutschen Gebrauchsmuster G 9102774 mit einem Sammelbehälter verbunden ist;
- Fig. 2: einen mit einem Verteilerkopf versehenen Auffangbehälter;
- Fig. 3: in skizzierter Form einen Verteilerkopf für einen Sammelbehälter gemäß Figur 1;
- Fig. 4: eine andere Darstellung eines Verteilerkopfes nach Fig. 3;
- Fig. 5: einen großvolumigen Sammelbehälter mit einem Leitungssystem in Serienschaltung gemäß der Erfindung;
- Fig. 6: in vergrößerter Darstellung eine Wandhalterung gemäß Fig. 5;
- Fig. 7: in vergrößerter Darstellung einen Auffangbehälter gemäß Fig. 1.

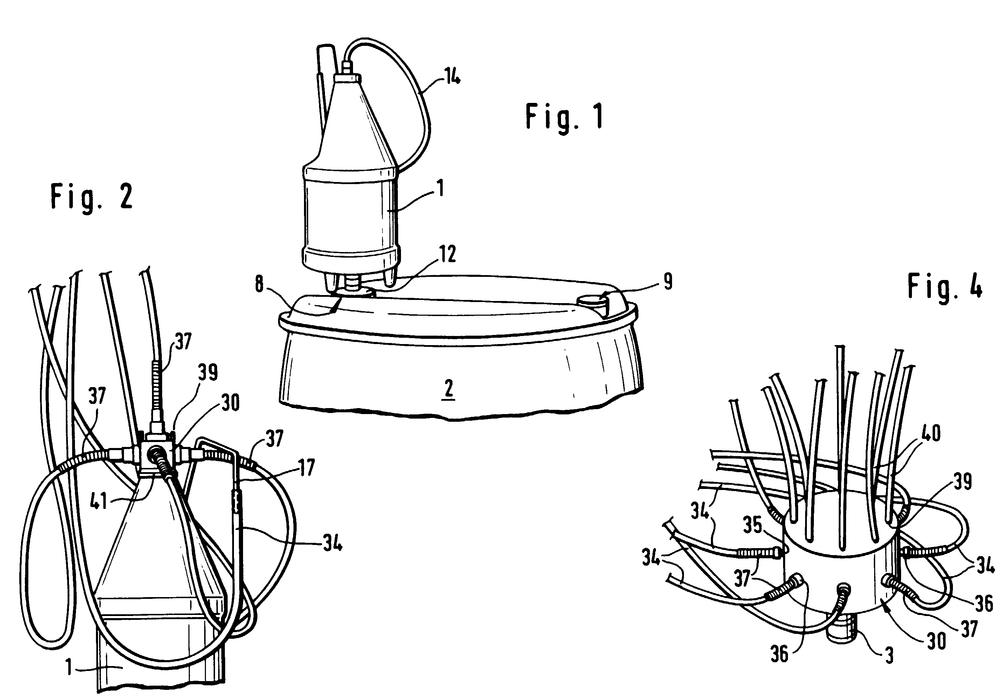

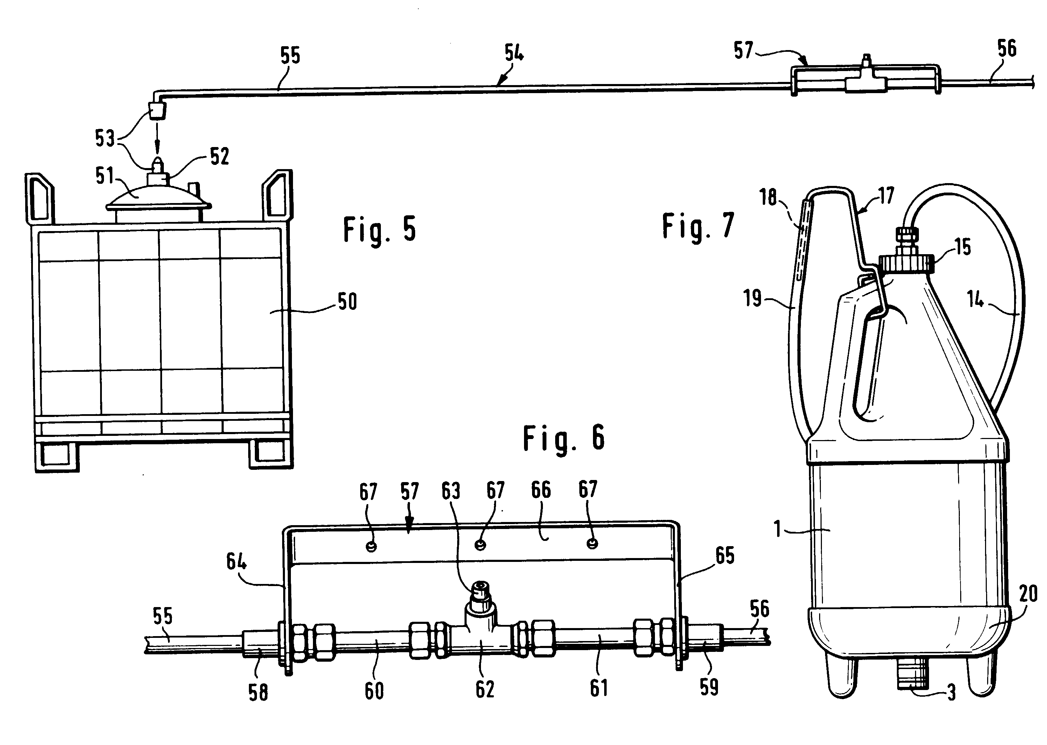

In Figur 1 ist ein Auffangbehälter 1 gezeigt, welcher über eine als Schnellanschluß 8 bezeichnete Schnellkupplung mit einem Sammelbehälter 2 verbunden ist. Der Schnellanschluß ermöglicht eine lösbare rastende Verbindung zwischen dem Auffangbehälter 1 und dem Sammelbehälter 2, wobei wegen der Anpassung der beiden Anschlußteile nur mit den entsprechenden Anschlußteilen versehene Auffangbehälter an den Sammelbehälter 2 angeschlossen werden können. Das weibliche Anschlußteil 3 ist aus Figur 7 ersichtlich. Der männliche Teil des Schnellanschlusses am Sammelbehälter 2 ist mit einer versiegelbaren Verschlußschraube 12 verbunden, die im Bedarfsfalle herausschraubbar ist. Der Behälter besitzt ferner ein Entlüftungsventil 9. Der Auffangbehälter ist weiterhin mit einem Auffangschlauch 14 versehen, der mit der zu entleerenden Druckmittelquelle verbunden werden kann. Wie aus Figur 7 ersichtlich, ist der in der Gebrauchsmusteranmeldung G 9102774 dargestellte Auffangbehälter mit einem Befestigungshaken 17 versehen, über welchen der Behälter an der Wand aufgehängt werden kann. Das Hakenende 18 dient gleichzeitig zum Sichern des Schlauchendes 19 (s. Figur 7) für den Fall, daß der Auffangschlauch 14 nicht in Betrieb ist. Der Auffangbehälter ist weiterhin noch mit einer versiegelbaren Behälterkappe 15 versehen, in die der Auffangschlauch 14 mündet. Einzelheiten hierzu ergeben sich aus der Gebrauchsmusteranmeldung G 9102774.

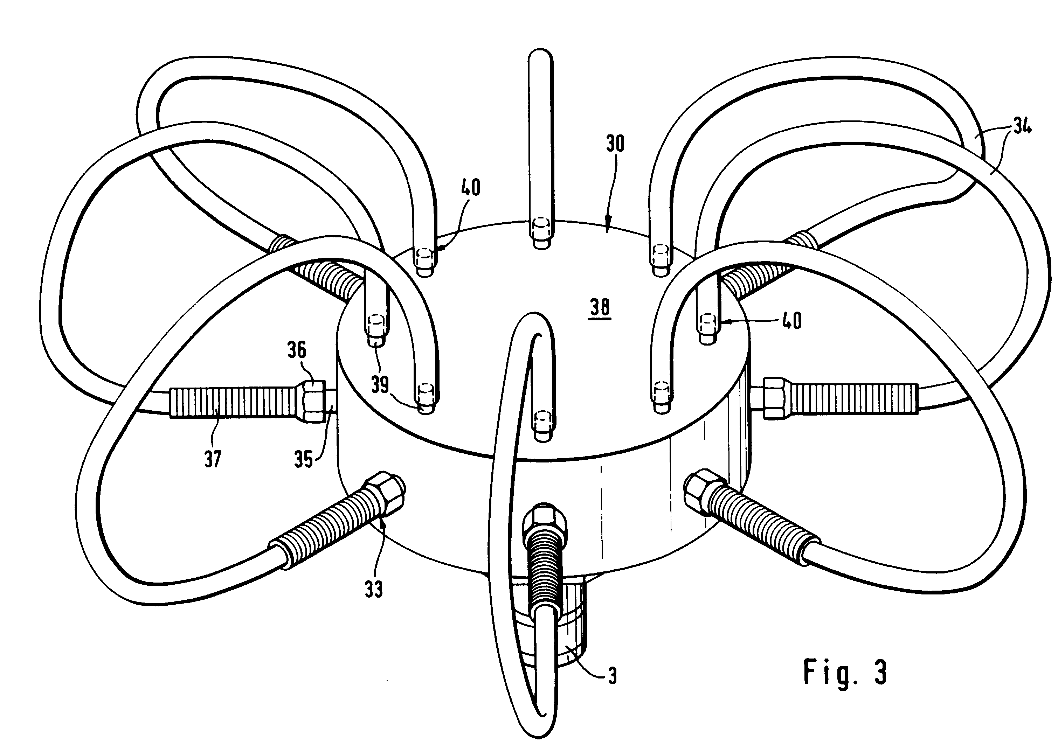

Figur 3 und 4 zeigen einen Verteilerkopf gemäß der Erfindung, wie er im Austausch zu dem Auffangbehälter 1 in Figur 1 auf den Sammelbehälter 2 aufsetzbar ist. Der Verteilerkopf 30 ist ein aus Leichtmetall, vorzugsweise Aluminium, hergestellter Kreiszylinder, in welchen die kopfseitigen Schlauchenden 33 der Schläuche 34 münden.

Dabei können beispielsweise in einen Verteilerkopf zwölf und mehr Schläuche münden. Es kann aber auch eine geringere Anzahl von Schläuchen für einen Verteilerkopf 30 vorgesehen sein (siehe z.B. Fig. 2). Dabei sind, wie aus Figur 4 ersichtlich, die kopfseitigen Schlauchenden auf in den Verteilerkopf eingeschraubte oder eingepreßte Anschlußstutzen 35 aufgezogen und mit Überwurfmuttern 36 gesichert, wobei die Überwurfmuttern gleichzeitig auch noch Knickschutzhüllen 37 für die Schläuche 34 tragen.

Die Anschlußstutzen 35 münden in als Zuleitungen dienende strahlenförmig angeordnete Bohrungen innerhalb des Verteilerkopfes 30, die im wesentlichen in einer Ebene liegen, aber auch auf der konisch nach unten geneigten Fläche eines Kegels liegen können. Die Zuleitungen, die aus der Zeichnung nicht ersichtlich sind, münden alle in einen in Figur 2 senkrecht nach oben ragenden Zentralkanal innerhalb des Verteilerkopfes 30, der mit der Mittelachse des Verteilerkopfes 30 fluchtet und nur einseitig in Figur 2 und 3 nach unten geöffnet ist. Der nach unten geöffnete Zentralkanal mündet in das weibliche Anschlußteil 3 eines Schnellanschlusses, der mit dem Anschlußteil 3 in Figur 7 vergleichbar ist. Auf diese Weise ist der Verteilerkopf 30 ebenso wie der Auffangbehälter 1 (s. Fig. 1) auf den Sammelbehälter 2 rastend aufsteckbar.

Um die Anschlußstutzen 35 abgewandten Enden der Schläuche 34 während des Zeitraums sichern zu können, in dem sie nicht benötigt werden, besitzt der Verteilerkopf 30 an seiner in Figur 3 und 4 oberen Stirnfläche 38 eine der Anzahl der Schläuche 34 entsprechende Anzahl von Aufnahmenippel 39, die von der Stirnfläche 38 in den beiden zuletzt genannten Figuren senkrecht abstehen. Die zylinderförmigen Aufnahmenippel 39 sind in ihrem Durchmesser derart dimensioniert, daß die äußeren Schlauchenden 40 der aus Plastik, insbesondere Silicon, bestehenden Schläuche 34 aufsteckbar und so gehalten sind. Dieses Prinzip ist mit der Halterung des Schlauchendes 19 an dem Hakenende 18 in Figur 7 vergleichbar.

In Figur 2 ist ein Verteilerkopf 30 gezeigt, der auf einen Auffangbehälter 1 aufgesetzt ist. Der Verteiler 30 hat im wesentlichen den Aufbau, wie er schon im Zusammenhang mit dem Verteilerkopf nach Figur 3 und 4 beschrieben wurde. Der wesentliche Unterschied besteht darin, daß gegenüber dem größeren Verteilerkopf nach Figur 3 und 4 eine verminderte Anzahl von Schläuchen von diesem abgeht. Außerdem ist der Verteilerkopf nicht, wie im Zusammenhang mit Figur 3 und 4 geschildert, durch einen Schnellanschluß (s. Schnellanschluß 8 nach Fig. 1 bzw. weibliches Anschlußteil 3 nach Fig. 3, 4 und 7) sondern mit einem versiegelten Schraubverschluß 41 versehen, welcher mit dem Schraubverschluß 15 nach Figur 7 vergleichbar ist, der dort den Auffangschlauch 14 mit dem Auffangbehälter 1 verbindet.

Der Vorteil des Verteilerkopfes 30 nach den Figuren 2 bis 4 besteht darin, daß gleichzeitig mehrere Quellen, wie sie beispielsweise mehrere Entlüftungsventile einer Kraftfahrzeug-Bremse bilden, entleert werden können. Die somit eingesammelte Flüssigkeit kann dann in einfacher Weise, wie in Figur 1 angedeutet, aus dem Auffangbehälter 1 in den Sammelbehälter 2 übergeben werden. Damit ergibt sich ein äußerst flexibles System, das durch Bereitstellung einer entsprechenden Anzahl von Auffangbehältern beliebig viele Quellen gleichzeitig entsorgen kann. Da aber die einzelnen Behälter versiegelt sind und durch entsprechende Verschlüsse bzw. an die Quellen angepaßte Schlauchenden nur bestimmte Flüssigkeiten ein- bzw. ausgefüllt werden können, handelt es sich gleichwohl um ein geschlossenes System, bei dem das unbeabsichtigte Zumischen fremder und auch damit das Recycling verhindernder Flüssigkeiten weitgehend verhindert ist.

In Figur 2 wurde parallel zu den Aufnahmenippeln 39 in der Mitte der oberen Stirnfläche des Verteilerkopfes 30 ein weiterer Anschlußstutzen mit zugehörigem Knickschutz 37 und Schlauch 34 installiert, so daß ein zusätzlicher Anschluß gegenüber den in die Mantelfläche mündenden Anschlüssen geschaffen wurde. Der besondere Vorteil liegt darin, daß der Zentralkanal als Durchgangsloch gebohrt werden kann, dessen dem Behälter 1 abgewandtes Ende mit dem zuletzt beschriebenen Anschlußstutzen verbunden ist.

Der Vorteil hierzu ist, daß die Verbindung mit dem Sammelbehälter nicht direkt, sondern über einen Auffangbehälter erfolgt, auf welchem der oben erwähnte Verteilerkopf fest montiert und versiegelt ist, wodurch die entsorgte Flüssigkeit bei Verwechslung mit Mineralöl, mit dem Aggregate betrieben werden können, an der direkten Einleitung mit Verschmutzung des gesamten Inhalts des Sammelbehälters gehindert wird.

Fig. 5 zeigt ein System mit in Reihe geschalteten Leitungen, die mit einem Großbehälter 50 verbunden sein können. Dieser Großbehälter besitzt an einem abschraubbaren Domdeckel das weibliche Anschlußteil 52 eines Schnellanschlusses 53.

Erfindungsgemäß kann nun statt an den Großbehälter 50 auch analog an den kleineren Sammelbehälter 2 gemäß Figur 1 ein Leitungssystem 54 angeschlossen werden, welches aus einer Anzahl in Reihe geschalteter Schläuche 55, 56 usw. besteht. Die einzelnen Schläuche sind über ortsfeste Halterungen 57 verbunden, welche nachfolgend in Verbindung mit Figur 6 näher erläutert werden.

Figur 6 zeigt in abgeschnittener Darstellung die Schläuche 55, 56, welche in Muffen 58, 59 münden. Diese Muffen 58, 59 gehen in Verbindungsstücke 60, 61 über, welche über ein Anschlußstück 62 miteinander verbunden sind.

Das Anschlußstück 62 trägt das männliche Anschlußteil 63, welches zu dem weiblichen Anschlußteil 3 beispielsweise eines Auffangbehälters 1 gemäß Figur 7 paßt. Die beiden Anschlußteile 3 und 63 bilden also Teile eines gemeinsamen Schnellanschlusses, so daß die Halterungen 57 im Prinzip die Anschlußaufgaben eines Sammelbehälters 2 übernehmen können. Das Leitungssystem 54 hat also die gleiche Wirkung wie eine ganze Reihe von in bestimmten Abständen zueinander aufgestellten Sammelbehältern in Figur 2, nur daß gleichzeitig die anfallende Flüssigkeit in einem Großbehälter 50 gesammelt ist, der sich kostengünstig transportieren und entsorgen läßt.

Zur Verbesserung des Systems ist die Anschlußstelle jeweils zwischen den Schläuchen 55, 56 und den zugehörigen Verbindungsstücken 60, 61 mit den Armen 64, 65 eines Wandhalters 66 verbunden. Der Wandhalter besitzt Öffnungen 67, mittels denen er an der Wand anschraubbar ist. Man erhält somit ein ortsfest installiertes Leitungssystem mit einer Reihe von an der Wand ortsfest installierten Anschlußteilen, deren räumlicher Abstand sich nach der Länge der verwendeten Schläuche 55, 56 richtet. Diese Schläuche werden in vorgegebenen Abmessungen (z.B. 3 m, 5 m, 10 m) bereitgehalten, so daß das Leitungssystem an die gegebenen Räumlichkeiten von Werkstätten und Fabriken in einfacher Weise angepaßt werden kann. Die Schläuche selbst werden in üblicher Weise durch Schellen an der Wand gehalten und über Winkelstücke um Deckenträger herumgeführt.

In der Regel wird der Schnellanschluß 53 andere Abmessungen haben als die durch die Anschlußteile 63 definierten Schnellanschlüsse.

Eine weitere Möglichkeit zur Verbesserung des Sammelsystems besteht in der Kombination der im Zusammenhang mit Figur 3 und 4 beschriebenen Verteilerköpfe mit dem Leitungssystem 54. Es ist daher möglich, auch die Verteilerköpfe 30 mit ihrem weiblichen Anschlußteil 3 auf die männlichen Anschlußteile 63 aufzusetzen, so daß ohne Zwischenschaltung eines Auffangbehälters direkt eine den Schläuchen 34 entsprechende Anzahl von Quellen über das Anschlußstück 62 entsorgt werden kann.

## Patentansprüche

1. Einrichtung zum Sammeln einer Flüssigkeit, bei der ein zentraler Sammelbehälter (2,50) über ein Leitungssystem (34,54) mit mehreren Quellen für die zu sammelnde Flüssigkeit verbindbar ist, wobei innerhalb des Leitungsweges (34,54) mindestens ein Schnellanschluß (8,63) angeordnet ist, über welchen die Quellen mit dem Behälter (2,50) verbindbar sind, wobei das Leitungssystem aus mehreren Schläuchen (34) gebildet ist, die von den Quellen sternförmig zu einem Verteilerkopf (30) laufen, dadurch **gekennzeichnet**, daß der Verteilerkopf (30) ein Anschlußteil (3) aufweist, und mittels dessen über einen Schnellanschluß (8,63) mit dem Sammelbehälter (2) verbunden ist.

2. Einrichtung nach Anspruch 1, dadurch **gekennzeichnet**, daß ein erstes, vorzugsweise männliches Anschlußteil des Schnellanschlusses (8) in den Sammelbehälter (2) lösbar eingeschraubt ist und über das zweite vorzugsweise weibliche Anschlußteil (3) der Verteilerkopf (30) ortsfest auf den Sammelbehälter (2) aufsetzbar ist.

3. Einrichtung zum Sammeln einer Flüssigkeit, bei der ein zentraler Sammelbehälter (2,50) über ein Leitungssystem (34,54) mit mehreren Quellen für die zu sammelnde Flüssigkeit verbindbar ist, wobei innerhalb des Leitungsweges (34,54) mindestens ein Schnellanschluß (8,63) angeordnet ist, über welchen die Quellen mit dem Behälter (2,50) verbindbar sind, wobei das Leitungssystem aus mehreren Schläuchen (34) gebildet ist, die von den Quellen sternförmig zu einem Verteilerkopf (30) laufen, dadurch **gekennzeichnet**, daß der Verteilerkopf (30) mit einem auf einen Schnellanschluß (8) des Sammelbehälters (2) aufsetzbaren Auffangbehälter (1) verbunden ist.

4. Einrichtung nach einem der Ansprüche 1 bis 3, dadurch **gekennzeichnet**, daß der Verteilerkopf (30) sternförmig radial in einen Zentralkanal laufende Zuleitungskanäle aufweist, die nach außen in zugehörige Anschlußstutzen (35) münden.

5. Einrichtung nach Anspruch 4, dadurch **gekennzeichnet**, daß die Außendurchmesser der vorzugsweise konischen Anschlußstutzen (35), auf welche die Schläuche (34) gesteckt werden, ungefähr so groß sind wie die Anschlußstifte der Flüssigkeitsquellen, auf die die Schläuche (34) ebenfalls aufgesteckt werden.

6. Einrichtung nach Anspruch 4 oder 5, dadurch **gekennzeichnet**, daß der Verteilerkopf (30) aus einem Aluminiumzylinder gebildet ist, in dessen Längsachse der Zentralkanal verläuft und die Zuleitungen strahlenförmig und etwa in der Mittelebene des Zylinders verlaufend im wesentlichen senkrecht zum Zentralkanal stehen und in diesen münden.

7. Einrichtung nach einem der Ansprüche 1 bis 6, dadurch **gekennzeichnet**, daß zur Arretierung der den Anschlußstutzen abgewandten Enden vorübergehend nicht benutzter Schläuche (34) auf dem Verteilerkopf (30) Aufnahmenippel (39) verteilt angeordnet sind.

8. Einrichtung nach Anspruch 7, dadurch **gekennzeichnet**, daß die Aufnahmenippel (39) auf der dem Schnellanschluß (8) des Verteilerkopfes (30) abgewandten Stirnfläche (38) des Verteilerkopfes (30) kreisförmig angeordnet sind.

9. Einrichtung zum Sammeln einer Flüssigkeit, bei der ein zentraler Sammelbehälter (50) über ein Leitungssystem (54) aus hintereinander in Reihe angeordneten Leitungen mit mehreren Quellen (1,30) für die zu sammelnde Flüssigkeit verbindbar ist, wobei innerhalb des Leitungsweges an den Verbindungsstellen (57) der Leitungen mindestens ein mit einem Ventil versehener Schnellanschluß (63) eingefügt ist, der den vorübergehenden Anschluß einer Flüssigkeitsquelle (1) gestattet, und wobei das dem Sammelbehälter (50) zugewandte Ende des Leitungssystems (54) mit dem Behälter über eine lösbare Schnellkupplung (53) verbunden ist, dadurch **gekennzeichnet**, daß die Verbindungsstellen (57) der Leitungen mit einer Wandhalterung (66) zur ortsfesten Halterung der den Verbindungsstellen (57) zugeordneten Schnellanschlüsse (63) versehen sind.

10. Einrichtung nach Anpruch 9, dadurch **gekennzeichnet**, daß die Leitungen aus flexiblen Schläuchen (55,56) gebildet sind.

11. Einrichtung nach Anspruch 10, dadurch **gekennzeichnet**, daß die Länge der Schläuche genormt ist.

12. Einrichtung nach einem der Ansprüche 1 bis 11, dadurch **gekennzeichnet**, daß die Druckmittelquellen (1,30) vorzugsweise Bremsflüssigkeit enthaltende Baugruppen oder Behälter sind.

13. Verfahren zur Entsorgung von Bremsen, Kupplungen und/oder Lenkungen unter Verwendung einer Einrichtung nach einem der Ansprüche 1 bis 8, dadurch **gekennzeichnet**, daß die dem Verteilerkopf (30) abgewandten Schlauchenden (40) auf die ggf. mehreren Entlüftungsventile der Bremsen und anderer Aggregate eines Kraftfahrzeugs aufgesteckt werden, danach die angeschlossenen Ventile geöffnet und so lange Luftdruck auf den Einlaß des Ausgleichsbehälters gegeben wird, bis die Bremsflüssigkeit aus den Bremsen und Aggregaten in den Auffangbehälter oder den Sammelbehälter (1,2,50) gedrückt ist.

14. Verfahren zum gleichzeitigen Entleeren mehrerer Auffangbehälter (1) mittels einer Einrichtung nach einem der Ansprüche 9 bis 12, dadurch **gekennzeichnet** , daß die mit einem zu dem Schnellanschluß (63) an den betreffenden Verbindungstellen (57) passenden Auffangsbehälter (1) auf die zugehörigen Schnellanschlüsse (63) aufgesetzt werden, wodurch die Verbindung zwischen den betreffenden Auffangbehältern (1) und dem Leitungssystem (54) hergestellt wird.

15. Verteilerkopf (30) nach einem der Ansprüche 3 bis 8.

16. Leitungssystem (54) nach Anspruch 9 bis 11.

## Claims

1. A device for collecting a liquid, comprising a central collecting tank (2, 50) connectable by way of a conduit system (34, 54) with a plurality of sources for the liquid to be collected, there being arranged within the conduit path (34, 54) at least one quick-connect (8, 63) through which the sources are connectable to the tank (2, 50), the conduit system being formed of a plurality of hoses (34) which extend from the sources to a header (30) in star-like configuration,
**characterized** in that the header (30) has a coupling part (3) by which it is connected with the collecting tank (2) by way of a quick-connect (8, 63).

2. A device as claimed in claim 1,
**characterized** in that a first, preferably male coupling part of the quick-connect (8) is screwed detachably into the collecting tank (2), and in that the header (30) is adapted to be fixed to the collecting tank (2) by way of the second, preferably female coupling part (3).

3. A device for collecting a liquid, comprising a central collecting tank (2, 50) connectable by way of a conduit system (34, 54) with a plurality of sources for the liquid to be collected, there being arranged within the conduit path (34, 54) at least one quick-connect (8, 63) through which the sources are connectable to the tank (2, 50), the conduit system being formed of a plurality of hoses (34) which extend from the sources to a header (30) in star-like configuration,
**characterized** in that the header (30) is connected to a storing tank (1) which is adapted to be placed on a quick-connect (8) of the collecting tank (2).

4. A device as claimed in any one of the claims 1 to 3,
**characterized** in that the header (30) comprises supply channels which extend in star-like configuration radially into a central channel and terminate outwardly into associated connecting sockets (35).

5. A device as claimed in claim 4,
**characterized** in that the external diameters of the preferably conical connecting sockets (35), on which the hoses (34) are slipped, are roughly as large as the connecting pins of the liquid sources on which the hoses (34) are likewise slipped.

6. A device as claimed in claim 4 or 5,
**characterized** in that the header (30) is formed of an aluminum cylinder along whose longitudinal axis the central channel extends, and in that the supply conduits extend like rays roughly in the central plane of the cylinder and stand substantially vertically relative to the central channel and terminate into the central channel.

7. A device as claimed in any one of the claims 1 to 6,
**characterized** in that holding nipples (39) are distributed over the header (30) for fixing the ends of hoses (34) which temporarily are not in use, the ends being remote from the connecting sockets.

8. A device as claimed in claim 7,
**characterized** in that the holding nipples (39) are arranged circularly on the end surface (38) of the header (30) which is remote from the quick-connect (8) of the header (30).

9. A device for collecting a liquid, comprising a central collecting tank (50) connectable with a plurality of sources (1, 30) from which liquid is to be collected by way of a conduit system (54) comprising conduits arranged in series one after the other, there being interposed within the conduit paths at the joints (57) of the conduits at least one quick-connect (63) furnished with a valve and permitting the temporary connection of a liquid source (1), and with the end of the conduit system (54) facing the collecting tank (50) being connected with the tank by way of a detachable quick-acting coupling apparatus (53),
**characterized** in that the joints (57) of the conduits are provided with a wall holder (66) for the fixed mounting support of the quick-connects (63) associated with the joints (57).

10. A device as claimed in claim 9,
**characterized** in that the conduits are flexible hoses (55, 56).

11. A device as claimed in claim 10,
**characterized** in that the length of the hoses is standardized.

12. A device as claimed in any one of claims 1 to 11,
**characterized** in that the pressure fluid sources (1, 30), preferably, are assembly groups or tanks containing brake fluid.

13. A method for the disposal of waste liquid from brakes, clutches and/or steering systems by using a device as claimed in any one of claims 1 to 8,
**characterized** in that the hose ends (40) remote from the header (30) are slipped on possibly a plurality of bleeder valves connected to the brakes and other aggregates of an automotive vehicle, subsequently the connected valves are opened and air pressure is applied to the inlet of the supply reservoir for so long until the brake fluid is discharged from the brakes and aggregates into the storing tank or the collecting tank (1, 2, 50).

14. A method of simultaneously draining a plurality of storing tanks (1) by means of a device as claimed in any one of claims 9 to 12,
**characterized** in that the storing tanks (1) which engage the quick-connect (63) at the respective joints (57) are inserted onto the associated quick-connects (63), thereby establishing the connection between the respective storing tanks (1) and the conduit system (54).

15. A header (30) as claimed in any one of the claims 3 to 8.

16. A conduit system (54) as claimed in claims 9 to 11.

## Revendications

1. Dispositif de collecte d'un liquide, dans lequel un récipient collecteur central (2, 50) est agencé de façon à pouvoir être relié au moyen d'un système de tuyauteries (34, 54) à plusieurs sources de liquide à recueillir et il est prévu, disposé à l'intérieur de la ligne de tuyauteries (34, 54), au moins un raccord rapide (8, 63) au moyen duquel les sources peuvent être reliées au récipient (2, 50), le système de tuyauteries étant formé de plusieurs tuyaux (34) qui s'étendent, en étoile, des sources à une tête collectrice (30), caractérisé en ce que la tête collectrice (30) comporte une partie de raccord (3) et, au moyen de cette dernière, est reliée au récipient collecteur (2) par l'intermédiaire d'un raccord rapide (8, 63).

2. Dispositif selon la revendication 1, caractérisé en ce qu'une première partie de raccord, de préférence mâle, du raccord rapide (8) est vissée d'une manière amovible dans le récipient collecteur (2) et en ce qu'au moyen de la seconde partie de raccord (3), de préférence femelle, la tête collectrice (30) peut être montée d'une manière fixe sur le récipient collecteur (2).

3. Dispositif de collecte d'un liquide, dans lequel un récipient collecteur central (2, 50) est agencé de façon à pouvoir être relié au moyen d'un système de tuyauteries (34, 54) à plusieurs sources de liquide à recueillir et il est prévu, disposé à l'intérieur de la ligne de tuyauteries (34, 54), au moins un raccord rapide (8, 63) au moyen duquel les sources peuvent être reliées au récipient (2, 50), le système de tuyauteries étant formé de plusieurs tuyaux (34) qui s'étendent, en étoile, des sources à une tête collectrice (30), caractérisé en ce que la tête collectrice (30) est reliée à un récipient récepteur (1) agencé de façon à pouvoir être monté sur un raccord rapide (8) du récipient collecteur (2).

4. Dispositif selon l'une des revendications 1 à 3, caractérisé en ce que la tête collectrice (30) comporte des conduits d'amenée qui s'étendent radialement, en étoile, jusque dans un conduit central et qui se terminent à l'extérieur par des embouts de raccordement (35) associés.

5. Dispositif selon la revendication 4, caractérisé en ce que les diamètres extérieurs des embouts de raccordement (35), de préférence coniques, sur lesquels les tuyaux (34) sont emboîtés, ont approximativement la même dimension que les tétons de fixation associés aux sources de liquide sur lesquels les tuyaux (34) sont aussi emboîtés.

6. Dispositif selon la revendication 4 ou 5, caractérisé en ce que la tête collectrice (30) est formée d'un cylindre en aluminium suivant l'axe longitudinal duquel le conduit central s'étend et en ce que les amenées sont disposées d'une manière pratiquement perpendiculaire au conduit central, d'une façon rayonnante et en s'étendant pratiquement dans le plan moyen du cylindre et débouchent dans ce conduit central.

7. Dispositif selon l'une des revendications 1 à 6, caractérisé en ce que, pour immobiliser les extrémités des tuyaux (34) momentanément non utilisés qui sont situées à l'opposé des embouts de raccordement, des tétons de fixation (39) sont disposés d'une manière répartie sur la tête collectrice (30).

8. Dispositif selon la revendication 7, caractérisé en ce que les tétons de fixation (39) sont disposés en cercle sur la surface frontale (38) de la tête collectrice (30) qui est située à l'opposé du raccord rapide (8) de la tête collectrice (30).

9. Dispositif de collecte d'un liquide, dans lequel un récipient collecteur central (50) est agencé de façon à pouvoir être relié au moyen d'un système de tuyauteries (54), composé de tuyauteries disposées en série l'une derrière l'autre, à plusieurs sources (1, 30) de liquide à recueillir et il est prévu, inséré sur la ligne de tuyauteries et aux emplacements de liaison (57) des tuyauteries, au moins un raccord rapide (63) qui est pourvu d'une valve et qui autorise le raccordement momentané d'une source de liquide (1), tandis que l'extrémité du système de tuyauteries (54) qui est située du côté du récipient collecteur (50) est reliée au récipient par l'intermédiaire d'un accouplement rapide (53) amovible, caractérisé en ce que les emplacements de liaison (57) des tuyauteries sont pourvus d'un support mural (66) servant à maintenir d'une manière fixe les raccord rapides (63) associés aux emplacements de liaison (57).

10. Dispositif selon la revendication 9, caractérisé en ce que les tuyauteries sont formées de tuyaux souples (55, 56).

11. Dispositif selon la revendication 10, caractérisé en ce que la longueur des tuyaux est normalisée.

12. Dispositif selon les revendications 1 à 11, caractérisé en ce que les sources de fluide sous pression (1, 30) sont des ensembles structurels, ou des récipients, contenant de préférence un liquide de frein.

13. Procédé permettant de mettre au rebut des freins, embrayages et/ou directions en utilisant un dispositif selon les revendications 1 à 8, caractérisé en ce que les extrémités (40) des tuyaux qui sont situées à l'opposé de la tête collectrice (30) sont emboîtées sur les valves de mise à l'atmosphère, éventuellement multiples, des freins et autres ensembles d'un véhicule automobile, puis les valves raccordées sont ouvertes et de l'air comprimé est appliqué à l'entrée du réservoir de compensation suffisamment longtemps pour que le liquide de frein soit expulsé des freins et ensembles jusque dans le récipient récepteur ou le récipient collecteur (1, 2, 50).

14. Procédé permettant de vider simultanément plusieurs récipients récepteurs (1) au moyen d'un dispositif selon l'une des revendications 9 à 12, caractérisé en ce que les récipients récepteurs (1) pourvus d'un raccord rapide (63) aux emplacements de liaison (57) concernés sont montés sur les raccord rapides (63) associés, ce qui réalise la liaison entre les récipients récepteurs (1) concernés et le système de tuyauteries (54).

15. Tête collectrice (30) selon l'une des revendications 3 à 8.

16. Système de tuyauteries (54) selon la revendication 9 à 11.
